# FASCICULE DE BREVET EUROPEEN

(11) **EP 3 377 354 B1**
(45) Date de publication et mention de la délivrance du brevet: **08.04.2020**
(21) Numéro de dépôt: 16805307.2
(22) Date de dépôt: 09.11.2016
(51) Int. Cl.: B60K 11/02, B60K 11/04, B60L 1/02

(54) **SYSTEME DE REFROIDISSEMENT POUR VEHICULE ELECTRIQUE, ET VEHICULE ELECTRIQUE MUNI D'UN TEL SYSTEME**
KÜHLSYSTEM FÜR EIN ELEKTRISCHES FAHRZEUG UND ELEKTRISCHES FAHRZEUG DAMIT
COOLING SYSTEM FOR ELECTRIC VEHICLE AND ELECTRIC VEHICLE PROVIDED WITH SUCH A SYSTEM

(30) Priorité: 16.11.2015 FR 1560989
(43) Date de publication de la demande: 26.09.2018
(73) Titulaire: Bluebus, 29500 Ergue Gaberic (FR)
(72) Inventeur: DESNEUX, Alexandre, 69720 Saint Laurent de Mure (FR); DURAND, Fabien, 69150 Decines (FR)
(74) Mandataire: IPAZ
(86) Numéro de dépôt international: PCT/EP2016/077118
(87) Numéro de publication internationale: WO 2017/084941

(56) Documents cités:
- EP-A1- 1 589 601
- GB-A- 2 332 507
- US-A1- 2002 053 216
- US-B2- 7 571 785

## Description

La présente invention concerne un système de refroidissement d'au moins une partie des organes fonctionnels faisant partie de la chaîne de traction d'un véhicule électrique. Elle concerne également un véhicule électrique équipé d'un tel système, en particulier un véhicule électrique de transport en commun sur route, de type bus électrique rechargeable ou tram-bus électrique rechargeable.

Le domaine de l'invention est le domaine des systèmes de refroidissement des organes de la chaîne de traction pour véhicule électrique, et en particulier pour véhicule électrique dans lequel l'ensemble de l'énergie pour le mouvoir est fournie par au moins un module de stockage d'énergie électrique embarqué rechargeable depuis une source extérieure.

### Etat de la technique

Un des moyens de transport en commun les plus prisés est le bus car sa mise en place ne nécessite pas d'infrastructure spécifique, de type voie ferrée par exemple. Pour diminuer la pollution liée aux transports en commun, les bus électriques font leur apparition encouragée à la fois par la prise de conscience des utilisateurs mais également par des mesures administratives incitatives favorisant l'achat et l'utilisation des véhicules électriques.

Le système de refroidissement des organes fonctionnels d'un bus électrique, tels que le moteur électrique ou des onduleurs ou encore des convertisseurs de puissance, est indispensable pour le bon fonctionnement du bus électrique. De plus, compte-tenu de la présence de composants électroniques dans la plupart de ces organes, le refroidissement doit assurer le maintien de ces organes à une température inférieure comparée à celle généralement exigée pour les bus thermiques. En même temps, le besoin en refroidissement des organes électriques n'est pas le même d'un organe à l'autre.

Or, les systèmes de refroidissement des bus électriques actuels présentent des capacités inadaptées et sont peu flexibles.

US 2002/053216 A divulgue un système de refroidissement de véhicule électrique, comprenant une branche principale et une branche secondaire.

Un but de la présente invention est de remédier à ces inconvénients. Un autre but de l'invention est de proposer un système de refroidissement pour véhicule électrique plus flexible.

Il est aussi un but de l'invention de proposer un système de refroidissement pour véhicule électrique plus adapté aux différents organes dudit véhicule.

Encore un autre but de l'invention est de proposer un système de refroidissement pour véhicule électrique plus intelligent.

### Exposé de l'invention

L'invention permet d'atteindre au moins l'un de ces buts par un système de refroidissement pour un véhicule électrique, en particulier un véhicule électrique terrestre de transport en commun, ledit système comprenant au moins deux circuits de refroidissement en parallèle, chacun dédié au refroidissement d'un groupe d'organes(s) fonctionnel(s) comprenant au moins un organe fonctionnel d'une chaîne de traction dudit véhicule.

Ainsi, le système de refroidissement selon l'invention propose d'utiliser plusieurs circuits de refroidissement en parallèle pour refroidir les organes fonctionnels intervenant dans la chaîne de traction du véhicule. Il est ainsi possible d'adapter le refroidissement réalisé en fonction de chaque organe fonctionnel ou de chaque groupe d'organe(s) fonctionnel(s). Par conséquent, le système de refroidissement selon l'invention est plus flexible, tout en réalisant un refroidissement plus adapté et plus intelligent, comparé aux systèmes de refroidissement de l'état de la technique.

Le système selon l'invention comprend au moins un fluide de refroidissement. Avantageusement, au moins deux circuits de refroidissement peuvent comprendre un même fluide de refroidissement, fourni par un réservoir de fluide de refroidissement commun, appelé encore réservoir d'alimentation ou vase d'alimentation.

Ainsi, il n'est pas nécessaire de prévoir plusieurs réservoirs de fluides de refroidissement différents, ce qui rend le système de refroidissement selon l'invention plus pratique, moins coûteux et moins volumineux.

Par ailleurs, chaque circuit de refroidissement comprend un échangeur de chaleur individuel, réalisant un échange thermique pour refroidir le fluide de refroidissement utilisé dans ledit circuit de refroidissement avec un flux d'air.

Ainsi, l'échangeur de chaleur de chaque circuit de refroidissement peut être dimensionné en fonction de la capacité de refroidissement demandé dans ledit circuit de refroidissement.

Chaque échangeur de chaleur peut se présenter sous la forme d'un radiateur parcouru par un fluide de refroidissement.

Suivant l'invention, les échangeurs de chaleur de deux circuits de refroidissement sont, au moins en partie, superposés, de sorte qu'ils sont traversés par un même flux d'air.

Une telle architecture est plus compacte, plus simple et moins encombrante.

L'un des échangeurs de chaleur superposés de deux circuits de refroidissement peut être monté mobile, préférentiellement rotatif, entre une position fermée et une position ouverte, dans laquelle il autorise un accès à l'autre des échangeurs, par exemple pour de la maintenance.

L'échangeur de chaleur monté mobile peut être muni d'un moyen de maintien dudit échangeur en position ouverte, de sorte que l'utilisateur n'a pas besoin de le maintenir. Un tel moyen de maintien peut comprendre au moins un piston qui se déploie lorsque ledit échangeur mobile passe de la position fermée à la position ouverte.

Le système de refroidissement selon l'invention peut comprendre au moins un ventilateur, et en particulier deux ventilateurs adjacents, pour alimenter lesdits échangeurs avec un même flux d'air.

Autrement dit, les échangeurs d'au moins deux circuits de refroidissement peuvent être agencés de sorte que le flux d'air entraîné par chacun des ventilateurs traverse les deux échangeurs, ce qui permet d'augmenter la capacité de refroidissement de chacun des deux circuits de refroidissement.

Avantageusement, au moins un circuit de refroidissement peut comprendre au moins deux branches parallèles pour refroidir au moins deux organes fonctionnels en parallèle.

Ainsi, il est possible d'adapter, au sein d'un même circuit de refroidissement, le refroidissement réalisé en fonction des organes fonctionnels à refroidir. Il est ainsi possible qu'une des branches parallèles présente une capacité de refroidissement supérieure à une autre branche parallèle.

En particulier, au moins deux branches parallèles d'un même circuit de refroidissement peuvent être dimensionnées pour véhiculer le fluide de refroidissement à des débits différents.

Par exemple, une première branche parallèle peut être dimensionnée pour véhiculer le fluide de refroidissement à un premier débit et une deuxième branche parallèle peut être dimensionnée pour véhiculer le fluide de refroidissement à un deuxième débit, deux fois supérieur au premier débit. Dans une telle configuration, la capacité de refroidissement de la deuxième branche est deux fois supérieure à la capacité de refroidissement de la première branche.

Alternativement ou en plus, au moins un circuit de refroidissement peut comprendre au moins une branche pour refroidir au moins deux organes en série, ce qui permet une architecture plus simple du circuit de refroidissement.

Au moins un, en particulier chaque, circuit de refroidissement peut comprendre un appareil de circulation du fluide de refroidissement dans ledit circuit.

Lorsque le circuit de refroidissement comprend des branches en parallèles, l'appareil de circulation peut être disposé sur une branche commune à ces branches parallèles.

L'appareil de circulation peut être disposé en amont des organes à refroidir, par rapport au sens de circulation du fluide de refroidissement.

Suivant un exemple de réalisation non limitatif, l'appareil de circulation peut être une pompe.

Avantageusement, le système selon l'invention peut comprendre un réservoir d'expansion de fluide de refroidissement, appelé encore vase d'expansion, commun à au moins deux circuits de refroidissement, ce qui permet de simplifier le système de refroidissement selon l'invention et de diminuer son coût et son encombrement.

Un tel réservoir d'expansion peut être utilisé pour désaérer le fluide de refroidissement de plusieurs circuits de refroidissement.

Le système selon l'invention peut en outre comprendre un réservoir d'alimentation de fluide de refroidissement commun à au moins deux circuits de refroidissement.

Un tel réservoir commun permet de surveiller et d'ajuster le niveau de fluide de refroidissement d'au moins deux circuits de refroidissement de manière centralisée, ce qui est plus rapide, plus simple et plus ergonomique.

Suivant un exemple de réalisation nullement limitatif, le fluide de refroidissement peut comprendre un liquide de refroidissement, en particulier un liquide de refroidissement comprenant de l'éthylène glycol ou du propylène glycol.

Suivant un autre aspect de la même invention, il est proposé un véhicule électrique comprenant un système de refroidissement selon l'invention, pour refroidir au moins une partie des organes fonctionnels faisant partie d'une chaîne de traction dudit véhicule

Le véhicule électrique selon l'invention peut en particulier être un véhicule électrique terrestre de transport en commun sur route, par exemple de type bus, car ou tram-bus.

Dans la présente demande, un « tram-bus » désigne un véhicule électrique de transport en commun terrestre monté sur roues et qui se recharge à chaque station, afin de ne pas nécessiter des infrastructures lourdes de type rails, caténaires, sur la voirie. Un tel véhicule électrique se recharge à chaque station au moyen d'éléments de charge de la station et d'un connecteur reliant ledit véhicule à ladite station.

Le véhicule électrique selon l'invention comprend un ou plusieurs modules de stockage d'énergie électrique rechargeable depuis une source externe, tel que le secteur.

Chaque module de stockage d'énergie électrique rechargeable peut comprendre une ou plusieurs batterie(s), ou supercapacité(s), rechargeables.

Dans une version particulière du véhicule selon l'invention, un premier circuit de refroidissement peut réaliser le refroidissement d'un moteur électrique, d'un convertisseur de tension, et d'un compresseur d'air dudit véhicule. En particulier, le premier circuit peut comprendre deux branches parallèles entre-elles, l'une réalisant le refroidissement du moteur électrique et l'autre réalisant le refroidissement du convertisseur et du compresseur.

En plus ou alternativement, un deuxième circuit de refroidissement peut réaliser le refroidissement d'un ou plusieurs onduleurs de la chaîne de traction. En particulier, le deuxième circuit peut comprendre deux branches parallèles entre-elles, l'une réalisant le refroidissement d'un premier onduleur et l'autre réalisant le refroidissement d'un deuxième onduleur.

Avantageusement, les échangeurs thermiques du système de refroidissement peuvent être disposés dans un logement prévu du côté de la paroi arrière dudit véhicule, en particulier à hauteur d'homme.

Ledit logement peut être fermé par un capot mobile, par exemple en rotation, autorisant l'accès à l'intérieur dudit logement dans une position ouverte. Le logement peut être accessible depuis la paroi arrière du véhicule ou depuis une zone arrière d'une paroi latérale longitudinale dudit véhicule.

De plus, le réservoir de remplissage du système selon l'invention, commun à au moins deux circuits de refroidissement, peut avantageusement être disposé à hauteur d'homme. L'accès audit réservoir peut être autorisé par une trappe mobile, par exemple en rotation, autorisant l'accès dans une position ouverte. La trappe peut être accessible depuis la paroi arrière du véhicule ou depuis une zone arrière d'une paroi latérale longitudinale dudit véhicule.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple non limitatif d'un véhicule électrique selon l'invention ;
- la FIGURE 2 est un schéma de principe d'un exemple non limitatif d'un système refroidissement selon l'invention ;
- la FIGURE 3 est une représentation schématique d'un exemple d'une chaîne de traction d'un véhicule électrique selon l'invention ;
- la FIGURE 4 est une représentation schématique partielle de la partie arrière du véhicule de la FIGURE 1 comprenant la chaîne de traction de la FIGURE 3 ; et
- les FIGURES 5a et 5b sont des représentations schématiques des échangeurs de chaleurs du système de la FIGURE 2.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures, les éléments communs à plusieurs figures conservent la même référence.

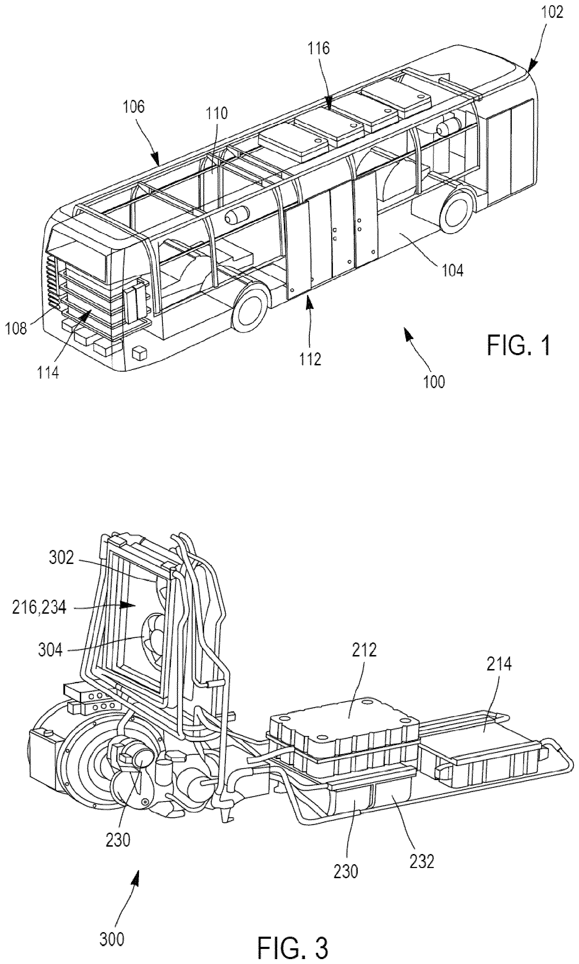

La FIGURE 1 est une représentation schématique d'un exemple non limitatif d'un véhicule électrique selon l'invention.

Le véhicule électrique 100 représenté sur la FIGURE 1 est un bus électrique comportant un habitacle délimité par une paroi avant 102, deux parois latérales longitudinales 104 et 106, une paroi arrière 108, une paroi supérieure 110 et une paroi inférieure 112.

Le bus électrique comporte un ou plusieurs moteurs électriques (non représentés sur la FIGURE 1), des modules 114, dits arrière, de stockage d'énergie électrique, disposés du côté de la paroi arrière 108. Le bus 100 comprend en outre des modules 116, dits supérieurs, de stockage d'énergie électrique, disposés dans un logement aménagé dans la paroi supérieure 110 du bus 100.

Les modules de stockage d'énergie électrique 114 et 116 sont rechargés depuis une source électrique externe, par l'intermédiaire d'un câble de rechargement, comprenant éventuellement un fil pilote.

Le bus électrique 100 est mis en mouvement exclusivement par une chaîne de traction alimentée par l'énergie électrique fournie par les modules de stockage d'énergie électriques 114 et 116, qui peuvent être des batteries ou des surcapacités. La chaîne de traction comprend un ou plusieurs moteurs électriques, au moins un onduleur, au moins un convertisseur de tension, etc. Ces organes fonctionnels sont refroidis par un système de refroidissement selon l'invention.

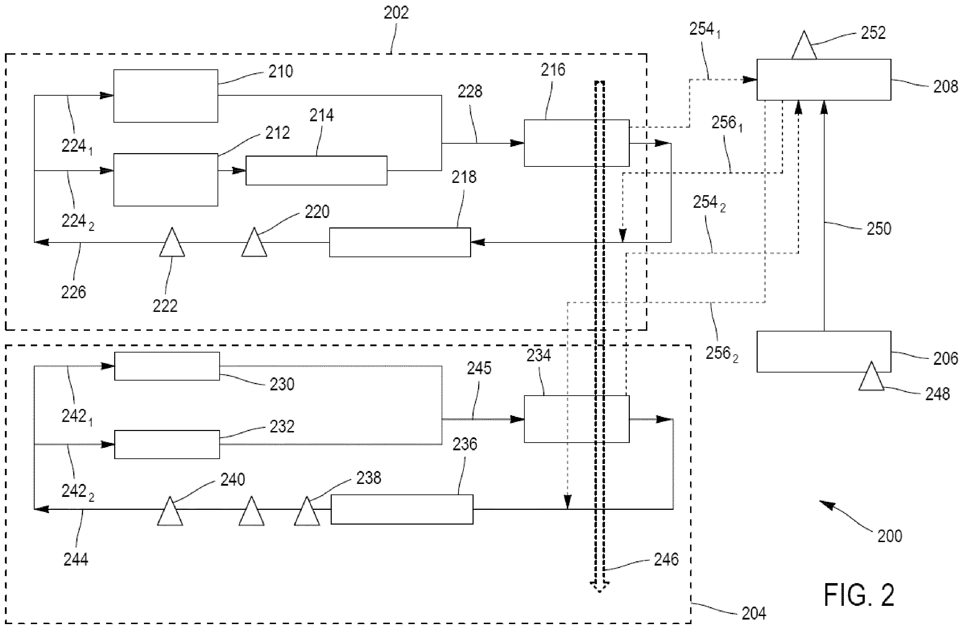

La FIGURE 2 est un schéma de principe d'un exemple non limitatif d'un système de refroidissement selon l'invention.

Le système de refroidissement 200, représenté sur la FIGURE 2, peut être utilisé dans le bus électrique 100 de la FIGURE 1.

Le système 200 comprend un premier circuit 202 et un deuxième circuit 204 disposés en parallèle. Les circuits 202 et 204 sont alimentés par un même fluide de refroidissement fourni au circuit au travers d'un réservoir d'alimentation commun 206, encore appelé vase d'alimentation ou d'expansion.

Le système 200 comprend également un réservoir d'expansion 208, ou vase d'expansion, commun aux circuits de refroidissement 202 et 204 et disposé entre lesdits circuits de refroidissement 202-204 et le réservoir d'alimentation 206. Le réservoir d'expansion est en particulier utilisé pour désaérer le fluide de refroidissement commun utilisé dans les circuits de refroidissement 202-204.

Le circuit de refroidissement 202 est utilisé pour refroidir un moteur électrique 210, un convertisseur de puissance 212 réalisant une conversion 400V->24V, et un compresseur d'air 214. Le circuit de refroidissement 202 comprend un échangeur de chaleur 216 en amont des organes 210-214, une pompe 218 pour faire circuler le fluide refroidissement, en amont des organes 210-214. Une sonde de pression 220 et une sonde de température 222 sont disposées entre la pompe 218 et les organes 210-214 et permettent de mesurer la pression et la température du fluide refroidissement en amont des organes 210-214.

Le circuit de refroidissement 202 comprend deux branches parallèles 224₁ et 224₂. La branche 224₁ comporte le moteur électrique 210 et la branche 224₂ comporte le convertisseur de puissance 212 et le compresseur d'air 214 disposés en série sur cette branche 224₂. Les branches parallèles 224₁-224₂ sont alimentées en fluide de refroidissement par une branche commune amont 226 comportant la pompe 218, la sonde de pression 220 et la sonde de température 222. Les branches parallèles 224₁-224₂ se rejoignent au niveau d'une branche commune aval 228 comportant l'échangeur de chaleur 216.

La pompe 218 permet de faire circuler le fluide refroidissement à un débit total de 60l/minute à une pression de 1,2bar. La branche parallèle 224₁ est dimensionnée pour véhiculer le fluide de refroidissement à un débit de 40l/minute et la branche parallèle 224₂ est dimensionnée pour véhiculer le fluide de refroidissement à un débit de 20l/minute.

Le circuit de refroidissement 204 est utilisé pour refroidir deux onduleurs 230 et 232. Le circuit de refroidissement 204 comprend un échangeur de chaleur 234 en amont des onduleurs 230-232, une pompe 236 pour faire circuler le fluide refroidissement, en amont des onduleurs 230-232. Une sonde de pression 238 et une sonde de température 240 sont disposées entre la pompe 236 et les onduleurs 230-232 et permettent de mesurer la pression et la température du fluide refroidissement en amont des onduleurs 230-232.

Le circuit de refroidissement 204 comprend deux branches parallèles 242₁ et 242₂. La branche 242₁ comporte l'onduleur 230 et la branche 242₂ comporte l'onduleur 232. Les branches parallèles 242₁-242₂ sont alimentées en fluide de refroidissement par une branche commune amont 244 comportant la pompe 236, la sonde de pression 238 et la sonde de température 240. Les branches parallèles 242₁-242₂ se rejoignent au niveau d'une branche commune aval 245 comportant l'échangeur de chaleur 234.

La pompe 236 permet de faire circuler le fluide refroidissement à un débit total de 40l/minute à une pression de 1,2bar. Chacune des branches parallèles 242₁-242₂ est dimensionnée pour véhiculer le fluide de refroidissement à un débit de 20l/minute.

L'échangeur de chaleur, respectivement 216 et 234, de chaque circuit de refroidissement, respectivement 202 et 204, réalise un échange thermique entre le fluide de refroidissement circulant dans ledit circuit de refroidissement et un flux d'air 246, en vue de refroidir le fluide de refroidissement. Le flux d'air 246 utilisé par les deux échangeurs 216 et 234 est commun aux deux échangeurs et est envoyé sur les deux échangeurs 216 et 234 grâce à des moyens d'entraînement communs (non représentés sur la FIGURE 2), tels que des ventilateurs, disposés en amont ou en aval desdits échangeurs 216 et 234 par rapport au sens du flux d'air 246.

Le réservoir d'alimentation 206 comporte une pompe 248 qui peut être actionnée par appui sur un bouton, pour alimenter le réservoir d'expansion 208, au travers d'un conduit 250. Ce dernier comporte une électrovanne 252 pour alimenter chaque circuit de refroidissement 202 et 204 en fluide de refroidissement. Le réservoir d'expansion 208 comporte également un moyen de signalisation visuel (non représenté) direct du niveau de fluide de refroidissement dans le réservoir d'expansion 208, tel qu'une LED. Un tel moyen de signalisation visuel pourrait être déporté par rapport au réservoir au niveau d'un système de lecture, par exemple du type LED ou autre.

Le réservoir d'expansion 208 est relié à chaque échangeur de chaleur, respectivement 216 et 234, au travers d'un conduit, respectivement 254₁ et 254₂, pour recevoir du fluide de refroidissement depuis ces échangeurs 216 et 234, si cela s'avère nécessaire. De plus, le réservoir d'expansion 208 est relié à chaque circuit de refroidissement 202 et 204, au travers d'un conduit, respectivement 256₁ et 256₂, en amont de la pompe 218 et 236, de chaque circuit 202 et 204, pour injecter du fluide de refroidissement dans ledit circuit de refroidissement 202 et 204, si cela s'avère nécessaire.

La FIGURE 3 est une représentation schématique partielle d'une chaîne de traction d'un bus électrique selon l'invention, et en particulier du bus 100 de la FIGURE 1

Sur la FIGURE 3, la chaîne de traction 300 est équipée d'un système de refroidissement selon l'invention, et en particulier du système de refroidissement de la FIGURE 2.

La FIGURE 3 montre en outre deux ventilateurs 302, 304 disposés l'un ou dessus de l'autre superposés permettant d'entraîner un flux d'air vers les échangeurs 216 et 234 des circuits de refroidissement 202 et 204.

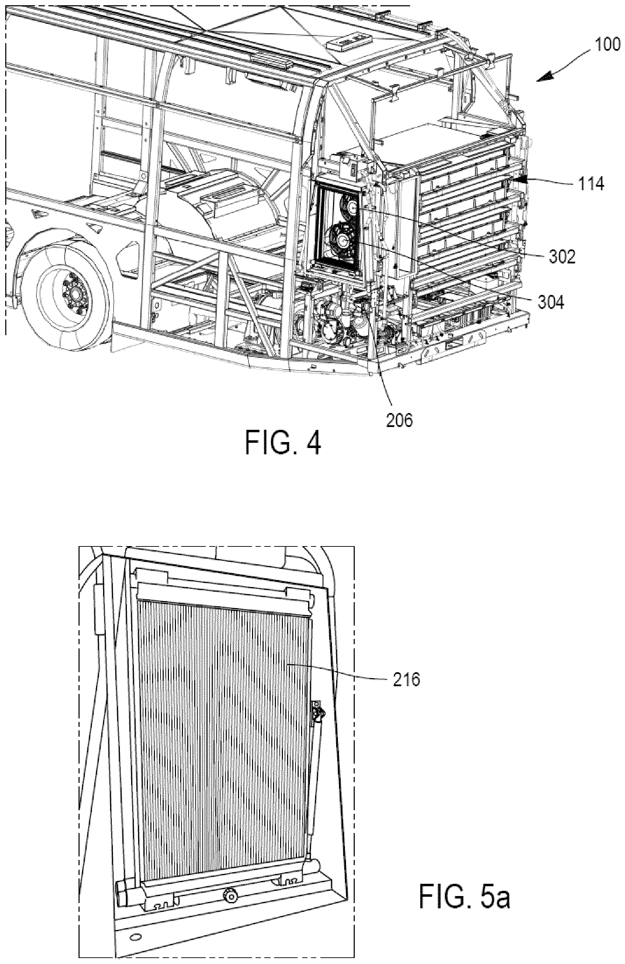

La FIGURE 4 est une représentation schématique partielle de la partie arrière du véhicule 100 de la FIGURE 1 comprenant la chaîne de traction 300 de la FIGURE 3.

Tel que visible sur la FIGURE 4, les ventilateurs 302 et 304 et les échangeurs sont disposés dans un logement prévu en partie arrière du bus 100, à hauteur d'homme, facilitant ainsi leur maintenance. En particulier, les ventilateurs 302 et 304 et les échangeurs sont disposés en périphérie des modules de stockage d'énergie 114.

De plus, le réservoir d'alimentation 206 permettant d'ajouter du fluide de refroidissement est également situé dans le logement prévu en partie arrière du bus 100, à hauteur d'homme, facilitant ainsi l'ajout de fluide de refroidissement par un opérateur.

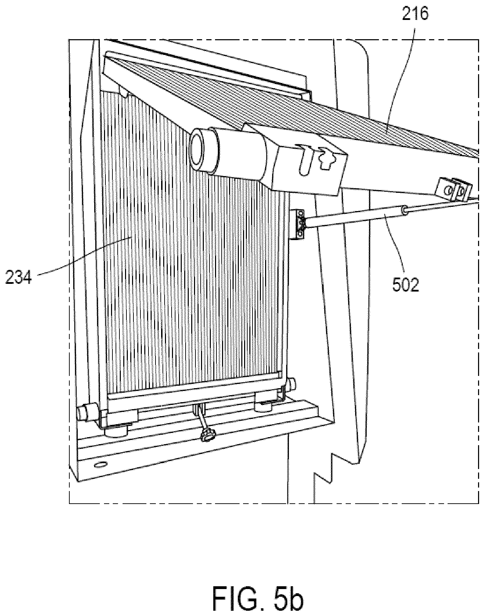

Les FIGURES 5a et 5b sont des représentations schématiques des échangeurs de chaleur du système 200 de la FIGURE 2.

Tel que montré sur les FIGURES 5a et 5b, les échangeurs de chaleur 216 et 234 sont montés l'un devant l'autre. Plus particulièrement, l'échangeur de chaleur 216 est agencé devant l'échangeur de chaleur 234, de sorte que le flux d'air 246 traverse d'abord l'échangeur de chaleur 216 avant de traverser l'échangeur de chaleur 234.

Les échangeurs de chaleur 216 et 234 sont disposés devant les ventilateurs 302 et 304.

De plus, l'échangeur de chaleur 216 est monté rotatif autour d'un axe sensiblement horizontal dans le sens longitudinal du véhicule 100, de sorte que l'échangeur de chaleur 216 est mobile en rotation entre une position fermée, représentée à la FIGURE 5a, et une position ouverte, représentée à la FIGURE 5b. Dans sa position ouverte (FIGURE 5b), l'échangeur 216 laisse accès à l'échangeur 234, permettant la maintenance dudit échangeur 234.

En outre, l'échangeur de chaleur 216 est muni d'un piston rotatif 502 qui se déploie lorsque l'échangeur 216 est en position ouverte, maintenant ledit échangeur en position ouverte, de sorte que l'opérateur n'a pas besoin de le tenir.

Chaque échangeur de chaleur 216 et 234 se présente sous la forme d'un radiateur parcouru par le fluide de refroidissement et traversé par le flux d'air 246.

Bien entendu, l'invention n'est pas limitée aux exemples qui viennent d'être décrits. Par exemple, elle n'est pas limitée au bus et peut être appliquée à tout véhicule électrique terrestre de transport en commun, en particulier sur route. De plus, elle n'est pas limitée au nombre et à la configuration des circuits de refroidissement représentés sur les FIGURES.

## Revendications

1. Système (200) de refroidissement pour un véhicule électrique (100), en particulier un véhicule électrique terrestre de transport en commun, ledit système (200) comprenant au moins deux circuits (202, 204) de refroidissement en parallèle, chacun dédié au refroidissement d'un groupe d'organes(s) fonctionnel(s) (210-214, 230-232) comprenant au moins un organe fonctionnel d'une chaîne de traction dudit véhicule (100), chaque circuit de refroidissement (202, 204) comprenant un échangeur de chaleur individuel (216, 234), réalisant un échange thermique pour refroidir le fluide de refroidissement avec un flux d'air (246) ;
**caractérisé en ce que** les échangeurs de chaleur (216, 234) de deux circuits de refroidissement (202, 204) sont au moins en partie superposés, de sorte qu'ils sont traversés par un même flux d'air.

2. Système (200) selon la revendication précédente, **caractérisé en ce qu'**au moins deux circuits de refroidissement (202, 204) comprennent un même fluide de refroidissement, fourni par un réservoir (206) de fluide de refroidissement commun.

3. Système (200) selon l'une quelconque des revendications précédentes, **caractérisé en ce que** l'un (216) des échangeurs de chaleur (216, 234) de deux circuits de refroidissement (202, 204) est monté rotatif entre une position fermée et une position ouverte dans laquelle il autorise un accès à l'autre (234) des échangeurs (216, 234).

4. Système (200) selon la revendication précédente, **caractérisé en ce que** l'échangeur de chaleur (216) monté rotatif est muni d'un moyen de maintien dudit échangeur (216) en position ouverte, tel qu'un piston qui se déploie lorsque ledit échangeur (216) passe de la position fermée à la position ouverte.

5. Système (200) selon l'une quelconque des revendications précédentes, **caractérisé en ce qu'**il comprend au moins un ventilateur (302, 304), et en particulier deux ventilateurs adjacents, pour alimenter les échangeurs (216, 234) avec un même flux d'air (246).

6. Système (200) selon l'une quelconque des revendications précédentes, **caractérisé en ce qu'**au moins un circuit de refroidissement (202, 204) comprend au moins deux branches parallèles (224₁, 224₂ ; 242₁, 242₂) pour refroidir au moins deux organes fonctionnels (210, 212-214 ; 230, 232) en parallèle.

7. Système (200) selon la revendication précédente, **caractérisé en ce qu'**au moins deux branches parallèles (224₁, 224₂) d'un même circuit de refroidissement (202) sont dimensionnées pour véhiculer le fluide de refroidissement à des débits différents.

8. Système (200) selon l'une quelconque des revendications précédentes, **caractérisé en ce qu'**au moins un circuit de refroidissement (202) comprend au moins une branche (224₂) pour refroidir au moins deux organes (212, 214) en série.

9. Système (200) selon l'une quelconque des revendications précédentes, **caractérisé en ce qu'**au moins un circuit de refroidissement (202, 204) comprend un appareil (218, 236) de circulation du fluide de refroidissement dans ledit circuit (202, 204).

10. Système (200) selon l'une quelconque des revendications précédentes, **caractérisé en ce qu'**il comprend un réservoir (208) d'expansion de fluide de refroidissement commun à au moins deux circuits de refroidissement (202, 204).

11. Système (200) selon l'une quelconque des revendications précédentes, **caractérisé en ce qu'**il comprend un réservoir (206) d'alimentation de fluide de refroidissement commun à au moins deux circuits de refroidissement (202, 204).

12. Système (200) selon l'une quelconque des revendications précédentes, **caractérisé en ce que** le fluide de refroidissement comprend un liquide de refroidissement.

13. Véhicule (100) électrique comprenant un système (200) de refroidissement selon l'une quelconque des revendications précédentes pour refroidir au moins une partie des organes fonctionnels (210-214, 232-234) faisant partie d'une chaîne de traction dudit véhicule (100).

14. Véhicule (100) selon la revendication précédente, **caractérisé en ce que** :
- un circuit de refroidissement (202) réalise le refroidissement d'un moteur électrique (210), d'un convertisseur de puissance (212) et d'un compresseur (214) d'air dudit véhicule (100) ; et/ou
- un circuit de refroidissement (204) réalise le refroidissement d'un ou plusieurs onduleurs (230-232) de la chaîne de traction.

15. Véhicule (100) selon l'une quelconque des revendications 13 ou 14, **caractérisé en ce que** les échangeurs thermiques (216, 234) du système de refroidissement (200) sont disposés dans un logement prévu du côté de la paroi arrière dudit véhicule (100).

16. Véhicule (100) selon l'une quelconque des revendications 13 à 15, **caractérisé en ce que** le réservoir (206) de remplissage du système de refroidissement (200) est disposé à hauteur d'homme.

## Patentansprüche

1. Kühlsystem (200) für ein elektrisches Fahrzeug (100), insbesondere ein elektrisches Landfahrzeug für den öffentlichen Verkehr, wobei das System (200) mindestens zwei parallel geschaltete Kühlkreisläufe (202, 204) umfasst, welche jeweils zur Kühlung einer Anordnung von mindestens eine Funktionseinheit einer Zugkette des Fahrzeugs (100) umfassender/en Funktionseinheit(en) (210-214, 230-232) bestimmt sind, wobei jeder Kühlkreislauf (202, 204) einen einzelnen Wärmetauscher (216, 234) umfasst, welcher mittels eines Luftstroms (246) einen Wärmetausch zur Kühlung des Kühlfluids ausführt;
**dadurch gekennzeichnet, dass** die Wärmetauscher (216, 234) zweier Kühlkreisläufe (202, 204) mindestens teilweise derart übereinander gelagert sind, sodass sie von einem selben Luftstrom durchströmt werden.

2. System (200) nach dem vorhergehenden Anspruch, **dadurch gekennzeichnet, dass** mindestens zwei Kühlkreisläufe (202, 204) ein selbes Kühlfluid umfassen, welches durch einen gemeinsamen Behälter (206) für Kühlfluid abgegeben wird.

3. System (200) nach einem der vorhergehenden Ansprüche, **dadurch gekennzeichnet, dass** einer (216) der Wärmetauscher (216, 234) zweier Kühlkreisläufe (202, 204) drehbeweglich zwischen einer geschlossenen Stellung und einer geöffneten Stellung angeordnet ist, in welcher geöffneten Stellung er einen Zugang zu dem anderen (234) der Wärmetauscher (216, 234) erlaubt.

4. System (200) nach dem vorhergehenden Anspruch, **dadurch gekennzeichnet, dass** der drehbeweglich angeordnete Wärmetauscher (216) mit einer den Wärmetauscher (216) in geöffneter Stellung haltenden Halteeinrichtung versehen ist, etwa wie ein Kolben, der beim Übergang des Wärmetauschers (216) von der geschlossenen in die geöffnete Stellung herausgefahren wird.

5. System (200) nach einem der vorhergehenden Ansprüche, **dadurch gekennzeichnet, dass** es mindestens einen Lüfter (302, 304), und insbesondere zwei benachbarte Lüfter, zur Versorgung der Wärmetauscher (216, 234) mit einem selben Luftstrom (246) umfasst.

6. System (200) nach einem der vorhergehenden Ansprüche, **dadurch gekennzeichnet, dass** mindestens ein Kühlkreislauf (202, 204) mindestens zwei parallel geschaltete Zweige (224₁, 224₂; 242₁, 242₂) zur Kühlung mindestens zweier parallel geschalteten Funktionseinheiten (210, 212-214; 230, 232) umfasst.

7. System (200) nach dem vorhergehenden Anspruch, **dadurch gekennzeichnet, dass** mindestens zwei parallel geschaltete Zweige (224₁, 224₂) eines selben Kühlkreislaufs (202) derart ausgebildet sind, um das Kühlfluid zu verschiedenartigen Durchflussmengen zu befördern.

8. System (200) nach einem der vorhergehenden Ansprüche, **dadurch gekennzeichnet, dass** mindestens ein Kühlkreislauf (202) mindestens einen Zweig (224₂) zur Kühlung mindestens zweier in Reihe geschalteten Funktionseinheiten (212, 214) umfasst.

9. System (200) nach einem der vorhergehenden Ansprüche, **dadurch gekennzeichnet, dass** mindestens ein Kühlkreislauf (202, 204) ein Gerät (218, 236) zur Strömung des Kühlfluids in dem Kreislauf (202, 204) umfasst.

10. System (200) nach einem der vorhergehenden Ansprüche, **dadurch gekennzeichnet, dass** es einen für mindestens zwei Kühlkreisläufe (202, 204) gemeinsamen Behälter (208) zur Ausdehnung von Kühlfluid umfasst.

11. System (200) nach einem der vorhergehenden Ansprüche, **dadurch gekennzeichnet, dass** es einen für mindestens zwei Kühlkreisläufe (202, 204) gemeinsamen Behälter (206) zur Versorgung mit Kühlfluid umfasst.

12. System (200) nach einem der vorhergehenden Ansprüche, **dadurch gekennzeichnet, dass** das Kühlfluid eine Kühlflüssigkeit umfasst.

13. Elektrisches Fahrzeug (100) mit einem Kühlsystem (200) nach einem der vorhergehenden Ansprüche zur Kühlung mindestens eines Teils der Funktionseinheiten (210-214, 232-234), die Teil einer Zugkette des Fahrzeugs (100) sind.

14. Fahrzeug (100) nach dem vorhergehenden Anspruch, **dadurch gekennzeichnet, dass**:
- ein Kühlkreislauf (202) die Kühlung eines Elektromotors (210), eines Stromrichters (212) und eines Kompressors (214) des Fahrzeugs (100) ausführt; und/oder
- ein Kühlkreislauf (204) die Kühlung eines oder mehrerer Wechselrichter(s) (230-232) der Zugkette ausführt.

15. Fahrzeug (100) nach einem der Ansprüche 13 oder 14, **dadurch gekennzeichnet, dass** die Wärmetauscher (216, 234) des Kühlsystems (200) in einer Aufnahme gelagert sind, die auf der Seite der hinteren Wand des Fahrzeugs (100) vorgesehen ist.

16. Fahrzeug (100) nach einem der Ansprüche 13 bis 15, **dadurch gekennzeichnet, dass** der Behälter (206) zur Füllung des Kühlsystems (200) in Mannshöhe gelagert ist.

## Claims

1. A cooling system (200) for an electric vehicle (100), in particular an electric public transport land vehicle, said system (200) comprising at least two cooling circuits (202, 204) in parallel, each dedicated to cooling a group of functional element(s) (210-214, 230-232) comprising at least one functional element of a drive train of said vehicle (100), each cooling circuit (202, 204) comprising an individual heat exchanger (216, 234), carrying out a heat exchange in order to cool the coolant with an airflow (246) ;
**characterized in that** the heat exchangers (216, 234) of two cooling circuits (202, 204) are at least partially superimposed, such that the same airflow passes through them.

2. The system (200) according to the preceding claim, **characterized in that** at least two cooling circuits (202, 204) comprise one and the same coolant, provided by a common coolant reservoir (206).

3. The system (200) according to any one of the preceding claims, **characterized in that** one (216) of the heat exchangers (216, 234) of two cooling circuits (202, 204) is mounted rotatable between a closed position and an open position in which it allows access to the other one (234) of the exchangers (216, 234).

4. The system (200) according to the preceding claim, **characterized in that** the rotatable heat exchanger (216) is provided with a means for holding said exchanger (216) in open position, such as a ram which is deployed when said exchanger (216) passes from the closed position to the open position.

5. The system (200) according to any one of the preceding claims, **characterized in that** it comprises at least one fan (302,304), and in particular two adjacent fans, for supplying the exchangers (216, 234) with one and the same airflow (246).

6. The system (200) according to any one of the preceding claims, **characterized in that** at least one cooling circuit (202,204) comprises at least two parallel branches (224₁,224₂;242₁,242₂) for cooling at least two functional elements (210,212-214;230,232) in parallel.

7. The system (200) according to the preceding claim, **characterized in that** at least two parallel branches (224₁,224₂) of one and the same cooling circuit (202) are dimensioned to convey the coolant at different flow rates.

8. The system (200) according to any one of the preceding claims, **characterized in that** at least one cooling circuit (202) comprises at least one branch (224₂) for cooling at least two elements (212,214) in series.

9. The system (200) according to any one of the preceding claims, **characterized in that** at least one cooling circuit (202, 204) comprises a device (218,236) for circulating the coolant in said circuit (202,204).

10. The system (200) according to any one of the preceding claims, **characterized in that** it comprises a coolant expansion reservoir (208) common to at least two cooling circuits (202,204).

11. The system (200) according to any one of the preceding claims, **characterized in that** it comprises a coolant supply reservoir (206) common to at least two cooling circuits (202,204).

12. The system (200) according to any one of the preceding claims, **characterized in that** the coolant comprises a cooling liquid.

13. An electric vehicle (100) comprising a cooling system (200) according to any one of the preceding claims, for cooling at least a part of the functional elements (210-214, 232-234) forming part of a drive train of said vehicle (100).

14. The vehicle (100) according to the preceding claim, **characterized in that**:
- a cooling circuit (202) carries out the cooling of an electric motor (210), a power converter (212), and an air compressor (214) of said vehicle (100); and/or
- a cooling circuit (204) carries out the cooling of one or more inverters (230-232) of the drive train.

15. The vehicle (100) according to any one of claims 13 or 14, **characterized in that** the heat exchangers (216, 234) of the cooling system (200) are arranged in a recess provided on the side of the rear panel of said vehicle (100).

16. The vehicle (100) according to any one of claims 13 to 15, **characterized in that** the reservoir (206) for filling the cooling system (200) is arranged at chest height.
